Europäisches Patentamt

European Patent Office

Office européen des brevets

(19)

(11) Publication number: **0 255 805**
**A2**

# (12) EUROPEAN PATENT APPLICATION

(21) Application number: **87830194.4**

(22) Date of filing: **26.05.87**

(51) Int. Cl.4: **G 02 C 1/04**

(30) Priority: **06.08.86 IT 2276186**

(43) Date of publication of application:
**10.02.88 Bulletin 88/06**

(84) Designated Contracting States:
**AT DE ES FR GB SE**

(71) Applicant: **SAFILO S.p.A.**
**I-32044 Pieve di Cadore (Belluno) (IT)**

(72) Inventor: **Tabacchi, Vittorio**
**Piazza Tiziano, 7**
**I-32044 Pieve Di Cadore Belluno (IT)**

(74) Representative: **Perani, Aurelio et al**
**c/o JACOBACCI-CASETTA & PERANI S.N.C. Via Visconti**
**di Modrone 7**
**I-20122 Milano (IT)**

(54) A steel wire construction eyeglasses frame.

(57) A metal construction eyeglasses frame (1) comprises a pair of lens (4) supporting bezels (3), respective legs (9,10), and a nose bridge (5) interconnecting the lens bezels (3); the eyeglasses frame further comprises a pair of arms (15,16) each associated with a respective one of said legs (9,10) and jutting out of the nose bridge (5), and each leg (9,10) being hinged to a respective free end (13,14) of such arms (15,16).

Fig-1

EP 0 255 805 A2

## Description

This invention relates to a metal construction eyeglasses frame of a type which comprises a pair of lens supporting bezels, respective legs, and a nose bridge interconnecting said bezels.

It is a recognized fact that eyeglasses frames of metal construction are currently enjoying widespread acceptance. Their main disadvantage is, however, that they tend to be heavy and stiff.

Furthermore, such prior metal construction eyeglasses frames have a critical area in their front frame portion to which the eyeglasses leg attachment boss is connected.

In conventional metal eyeglasses frames, the front framing forms the stressed structure of the whole eyeglasses frame, which is accordingly rendered quite stiff and affords limited possibilities for setting by the user while in use.

Such metal construction eyeglasses frames restrict, moreover, the range of lens profiles from which to choose.

It is the object of this invention to provide a metal construction eyeglasses frame which has such construction and performance features as to obviate the cited drawbacks of the prior art.

This object is achieved by a metal construction eyeglasses frame, of a type which comprises a pair of lens supporting bezels, respective legs, and a nose bridge interconnecting said bezels, and is characterized in that it comprises for either leg an arm jutting out of said nose bridge, each leg being hinged to the free end of said arm.

Further features and the advantages of this invention will become apparent from the following description of an exemplary embodiment thereof, given by way of illustration and not of limitation with reference to the accompanying drawing.

In the drawing:

Figure 1 shows a perspective view of an eyeglasses frame embodying this invention;

Figure 2 shows the eyeglasses frame of Figure 1 in top plan view; and

Figure 3 is a scrap-sectional view taken along the line III-III in Figure 1.

With reference to the drawing figures, the numeral 1 denotes generally a metal construction eyeglasses frame according to the invention. This eyeglasses frame 1 comprises a front framing 2 including a pair of bezels, indicated at 3, for supporting corresponding lenses 4.

Indicated at 5 is a nose bridge or crosspiece interconnecting said bezels 3 each carrying conventional nose fitting pads 17 and 18 respectively connected thereto.

Advantageously according to the invention, each of said bezels 3 is comprised of a first U-shaped portion 6 underlying the lens 4 and having a profile matching that of the lens it is expected to accommodate. Each bezel 3 comprises a flexible steel wire length 7 merging with one end 8 of said arcuate portion 6 and said nose bridge 5, and being associated with the top edge of said lens 4 and adapted to be stress fitted to the lens.

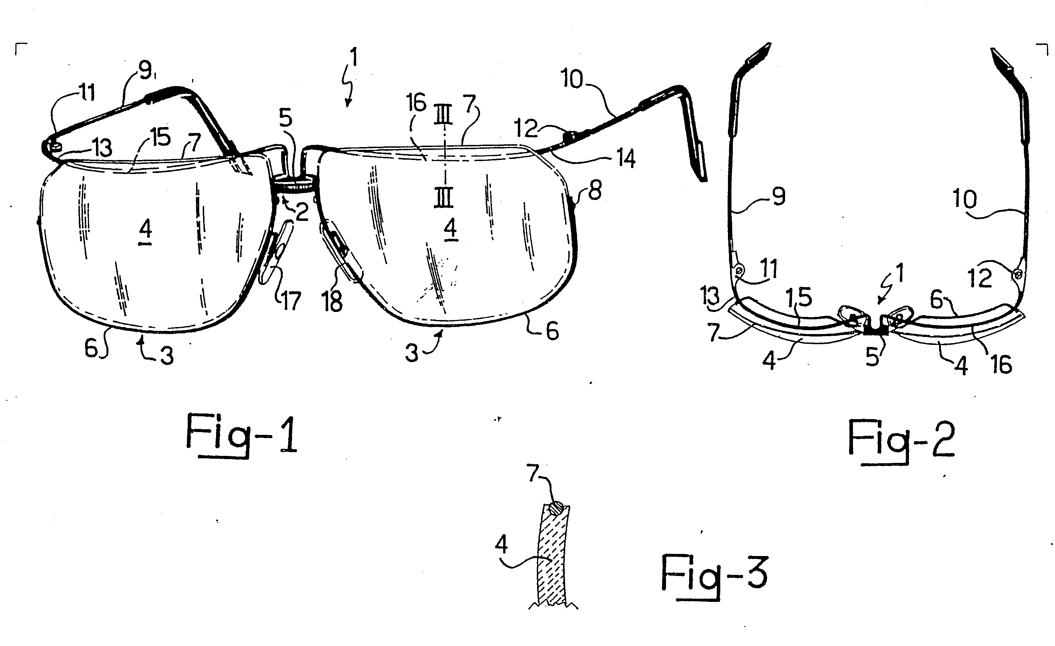

The steel wire length 7 would have, preferably, a circular cross-sectional shape as shown in Figure 3.

The reference numerals 9 and 10 denote conventional legs completing the eyeglasses frame 1 and being hinged to respective bosses 11 and 12 of conventional design. According to the invention, these bosses 11 and 12 are attached to respective ends 13 and 14 of a pair of arms 15 and 16 whose opposed ends are attached to said nose bridge 5.

Thus, the legs 9 and 10 are carried in cantilever relationship on the ends 13 and 14 of said arms 15 and 16, which arms extends parallel to the top edges of the lenses 4 at a set distance therefrom.

In other words, the nose bridge 5 forms a load-bearing member for the entire eyeglasses frame 1, because led to it are both the bezels 3 and the legs 9 and 10 via the arms 15 and 16.

Accordingly, with the construction of this invention, the advantages of a flexible lightweight eyeglasses frame are secured without jeopardizing its strength.

The inventive eyeglasses frame also lends itself to fit a variety of lens outline patterns. Moreover, the field of view of the lenses is broadened by relieving them of the boss presence.

It is also advantageous that the eyeglasses frame of this invention enables the lenses to be held at a set distance from the eyebrow arch as the eyeglasses are put on, thus contributing toward maintaining the lenses clean and clear for a longer time.

## Claims

1. A metal construction eyeglasses frame of a type which comprises a pair of lens (4) supporting bezels (3), respective legs (9,10), and a nose bridge interconnecting said bezels (3), characterized in that it comprises for either leg (9,10) an arm (15,16) jutting out of said nose bridge (5), each leg (9,10) being hinged to the free end (13,14) of each said arm (15,16).

2. A metal construction eyeglasses frame according to Claim 1, characterized in that said bezels (3) have a U-like shape and a profile matching said lenses (4) at a level below them.

3. A metal construction eyeglasses frame according to Claim 1, characterized in that it comprises a flexible wire (7) adapted to be stress fitted to the lens (4).

4. A metal construction eyeglasses frame according to Claims 1 and 3, characterized in that said arm (15,16) extends parallel to said flexible wire (7) at a set distance therefrom.

0255805

Fig-1

Fig-2

Fig-3